# EUROPÄISCHE PATENTSCHRIFT

(11) **EP 3 936 380 B1**
(45) Veröffentlichungstag und Bekanntmachung des Hinweises auf die Patenterteilung: **20.11.2024**
(21) Anmeldenummer: 21184775.1
(22) Anmeldetag: 09.07.2021
(51) Int. Cl.: B60P 3/00, B60P 1/64

(54) **ZUSTELLFAHRZEUG MIT EINEM MOBILEN AUFSATZ**
DELIVERY VEHICLE WITH A MOBILE ATTACHMENT
VÉHICULE DE LIVRAISON DOTÉ D'UN ACCESSOIRE MOBILE

(30) Priorität: 09.07.2020 DE 102020118167
(43) Veröffentlichungstag der Anmeldung: 12.01.2022
(73) Patentinhaber: Deutsche Post AG, 53113 Bonn (DE)
(72) Erfinder: Piontek, Christoph, 51597 Morsbach (DE); Kaschner, Oliver, 53639 Königswinter (DE); Winnebeck, Dr. Alexander, 53121 Bonn (DE)
(74) Vertreter: dompatent von Kreisler Selting Werner - Partnerschaft von Patent- und Rechtsanwälten mbB

(56) Entgegenhaltungen:
- DE-A1- 102016 209 099
- DE-B3- 102019 208 682
- US-A1- 2010 191 615
- US-A1- 2019 265 702

## Beschreibung

Die vorliegende Erfindung betrifft einen Liefercontainer sowie ein Auslieferfahrzeug mit einem solchen Liefercontainer zur Auslieferung von Packstücken und sonstigen Sendungen. Weiterhin betrifft die vorliegende Erfindung ein System zum Ausliefern von Packstücken und ein Verfahren zum Betrieb eines solchen Systems.

Heutige Auslieferfahrzeuge zum Ausliefern von Packstücken weisen eine Fahrerkabine und einen Laderaum zur Lagerung der Packstücke auf. Die Fahrzeugkabine und der Laderaum sind dabei miteinander verbunden. Der Laderaum weist weiterhin einen Mittelgang auf, wobei seitlich neben dem Mittelgang auf beiden Seiten Regale angeordnet sind zur Aufnahme der Packstücke. Darüber hinaus weist der Laderaum einen Ausgang an dem dem Fahrerhaus gegenüberliegenden Ende auf. Häufig ist darüber hinaus ein seitlicher Ausgang vorgesehen.

Dabei sind die Packstücke in den Regalen des Laderaums in einer losen Ordnung vorgesehen.

Bekannte Auslieferfahrzeuge weisen somit den Nachteil auf, dass einerseits ein großer Raum zur Aufnahme von Packstücken nicht zur Verfügung steht durch das Vorsehen des Mittelgangs. Weitere Regalfläche steht nicht zur Verfügung aufgrund des Vorsehens der Ausgangstüren aus dem Laderaum.

Weiterhin müssen die auszuliefernden Packstücke händisch durch den Zusteller in den Regalen gesucht werden. Insbesondere bei unterschiedlich großen Packstücken werden diese in unterschiedliche Regale transportiert, sodass ein einfaches und schnelles Auffinden des gesuchten Packstücks verhindert wird.

Darüber hinaus sind bei bekannten Auslieferfahrzeugen der Laderaum und das Fahrzeug fest miteinander verbunden. Dies führt dazu, dass bei einem Defekt des Fahrzeugs das gesamte Auslieferfahrzeug nicht mehr zur Verfügung steht. Wurde jedoch zuvor das Auslieferfahrzeug mit Packstücken beladen, muss ein aufwändiges Umladen auf ein weiteres, funktionierendes Auslieferfahrzeug erfolgen.

In der DE 10 2019 208 682 B3 wird ein mobiler Paketautomat für ein Kraftfahrzeug mit einer Steuervorrichtung offenbart. Der mobile Paketautomat weist einen Lagercontainer und einen Entnahmebereich zur Entnahme von Paketen sowie mehrere innerhalb des Lagercontainers angeordneten Lagerfächer auf, die jeweils einen Lagerfachboden zum Lagern der Pakete und eine Entladeseite zum Entladen der Pakete aufweisen.

In der US 010/191615 A1 wird ein Container mit einer Vielzahl von Fächern, welche auf einem Fahrgestell aufgenommen werden können, offenbart. Hierbei sind die Fächer in auf dem Fahrgestell aufgenommen Zustand von außen zugänglich.

Aufgabe der vorliegenden Erfindung ist es ein Auslieferfahrzeug zu schaffen, bei dem die auszuliefernden Packstücke oder sonstigen Sendungen schnell aufgefunden werden können und eine größere Anzahl an Packstücken oder sonstigen Sendungen transportiert werden können.

Die Aufgabe wird gelöst durch einen Liefercontainer gemäß Anspruch 1, ein Auslieferfahrzeug gemäß Anspruch 8, ein System gemäß Anspruch 11 sowie ein Verfahren zum Betrieb dieses Systems gemäß Anspruch 13.

Der erfindungsgemäße Liefercontainer zur Aufnahme durch ein Auslieferfahrzeug weist eine Vielzahl von Fächern auf, wobei jedes Fach ausgebildet ist zur Aufnahme von mehreren Packstücken oder sonstigen Sendungen. Dabei sind die Fächer von außen zugänglich. Insbesondere weist jedes Fach eine Entnahmeöffnung auf, durch die ein Packstück aus dem jeweiligen Fach entnommen werden kann, wobei die jeweilige Entnahmeöffnung der Fächer an einer der oder mehreren verschiedenen Außenseiten des Liefercontainers angeordnet sind. Weiterhin weist der Liefercontainer eine Vielzahl von Verschließelementen auf zum Verschließen der Fächer und insbesondere der jeweiligen Entnahmeöffnung. Durch die Verschließelemente wird während der Fahrt sichergestellt, dass keine Packstücke herausfallen können. Weiterhin wird durch die Verschließelemente sichergestellt, dass kein unbefugtes Entnehmen der Packstücke erfolgt. Weiterhin weist der Liefercontainer ein Verbindungselement auf zur Verbindung mit einem Auslieferfahrzeug. Der Liefercontainer ist somit unabhängig von dem Auslieferfahrzeug und kann bei Bedarf mit diesem durch das Verbindungselement verbunden werden. Der Liefercontainer bildet somit eine unabhängige Einheit, welche einfach getauscht werden kann. Weiterhin wird durch die Vielzahl von Fächern eine verbesserte Ordnung der Packstücke im Liefercontainer sichergestellt, sodass ein einfaches Auffinden gewährleistet wird. Da weiterhin die Fächer von außen, also von außerhalb des Liefercontainers, zugänglich sind, kann ein Mittelgang entfallen, wodurch mehr Raum im Liefercontainer zur Aufnahme von Packstücken zur Verfügung steht. Dabei sind ebenfalls die Vielzahl von Verschließelementen an einer der oder mehreren verschiedenen Außenseiten des Liefercontainers angeordnet. Für die Zustellung eines Packstücks durch den Zusteller wird somit das Verschließelement des jeweiligen Faches, welches das zuzustellende Packstücke enthält, geöffnet, das Packstück durch die Entnahmeöffnung aus dem Fach entnommen und sodann an die Zustelladresse ausgeliefert. Somit bietet der Liefercontainer eine verbesserte Ordnung, mehr Raum zur Aufnahme von Packstücken und ist dabei unabhängig von dem Auslieferfahrzeug.

Vorzugsweise handelt es sich bei den Verschließelementen auf der Entnahmeseite um Türen oder Rollentore. Dabei können ein, mehrere oder alle Verschließelemente als Türen ausgebildet sein. Alternativ kann ein Verschließelement, mehrere oder alle Verschließelemente als Rollentore ausgebildet sein. Selbstverständlich können einige Fächern mittels Türen verschlossen sein, wohingegen andere Fächer mittels Rollentoren verschlossen sind. Durch Türen oder Rollentore wird ein einfaches System zum Verschließen der einzelnen Fächer und deren Entnahmeöffnungen zur Verfügung gestellt, welches fehlerunanfällig ist.

Vorzugsweise sind alle Entnahmeöffnungen auf einer Seite des Liefercontainers angeordnet und die Entnahme der Packstücke aus dem Liefercontainer findet stets von derselben Seite statt. Insbesondere handelt es sich bei der Entnahmeseite um die rechte Seite eines Auslieferfahrzeugs, wenn der Liefercontainer mit einem Auslieferfahrzeug verbunden ist, bzw. der Seite, welche nicht der Fahrerseite des Auslieferfahrzeugs entspricht (Rechte Seite bei Rechtsverkehr und linke Seite bei Linksverkehr).. Somit ist eine Entnahme der Packstücke von einem Bürgersteig bzw. einer straßenabgewandten Seite aus möglich.

Vorzugsweise erstreckt sich mindestens eins der Fächer, mehrere oder alle Fächer über die gesamte Breite des Liefercontainers. Da die Fächer von außerhalb des Liefercontainers zugänglich sind, kann ein Mittelgang gerade entfallen. Somit ist es möglich, die Fächer über die gesamte Breite des Liefercontainers auszubilden zur Aufnahme einer vergrößerten Anzahl an Packstücken.

Vorzugsweise weist der Liefercontainer keinen Mittelgang auf.

Erfindungsgemäß sind mehrere oder alle Fächer über eine Beladeseite zugänglich. Dabei ist die Beladeseite gegenüber der Entnahmeseite angeordnet, sofern sich die Fächer über die gesamte Breite des Liefercontainers erstrecken. Gemäß der vorliegenden Erfindung ist zudem die Belade- und Entladeseite im Zustand, in dem der Liefercontainer durch ein Auslieferfahrzeug aufgenommen ist, von außen zugänglich. Dabei weisen die einzelnen Fächer insbesondere jeweils eine Beladeöffnung auf, welche auf einer Beladeseite des Liefercontainers angeordnet ist. Somit erfolgt ein Beladen des Liefercontainers über die Beladeseite, wohingegen eine Entnahme der Packstücke, wie vorstehend beschrieben, über die Entnahmeseite erfolgen kann. Somit kann die Beladeseite unabhängig von der Entnahmeseite ausgebildet sein. Die Beladeseite weist ein Verschließelement oder mehrere Verschließelemente auf zum Verschließen der Fächer. Dabei weist die Beladeseite ein Verschließelement auf, welches die Beladeöffnungen mehrerer oder aller Fächer gemeinsam verschließt. Hierdurch wird der Beladevorgang vereinfacht, da nicht einzelne Fächer geöffnet werden müssen, sondern lediglich das eine gemeinsame Verschließelement zu öffnen ist und sodann eine Beladung aller Fächer erfolgen kann. Das Verschließelement ist ausgebildet als Schiebetor.

Vorzugsweise ist mindestens eines der Fächer, mehrere oder alle Fächer schräg angeordnet insbesondere ausgehend von der Beladeseite zu Entnahmeseite. Hierdurch können die Packstücke, welche insbesondere an der Beladeseite in die jeweiligen Fächer eingeordnet werden, in Richtung der Entnahmeseite bewegt werden und können hier durch den Zusteller entnommen werden. Dabei kann die Bewegung der Packstücke passiv erfolgen lediglich durch Vorsehen der Schräge und die Wirkung der Gravitation, so dass die Packstücke entlang der Schräge rutschen, rollen oder dergleichen. Alternativ kann ein aktives Bewegen erfolgen beispielswiese durch einen Rollenantrieb oder dergleichen. Auch wenn eine Beladung durch die Entnahmeseite der einzelnen Fächer erfolgt und sich die Fächer insbesondere nicht über die gesamte Breite des Liefercontainers erstrecken, wird durch die Schräge der Fächer sichergestellt, dass die Packstücke stets in Richtung der Entnahmeöffnung bewegt werden.

Vorzugsweise weist mindestens eines der Fächer, mehrere oder alle Fächer zumindest teilweise mindestens ein aktives Förderelemente auf, beispielsweise ausgebildet als Rollenbahn mit mindestens einer angetriebenen Rolle, zur Bewegung der Packstücke innerhalb der Fächer. Insbesondere erstreckt sich das aktive Förderelement über die gesamte Bodenfläche der jeweiligen Fächer. Alternativ hierzu ist zumindest teilweise mindestens ein passives Förderelement vorgesehen, beispielsweise ausgebildet als Rutschfläche oder Rollenbahn ohne Antrieb, über die die Packstücke rutschend ohne aktiven Antrieb innerhalb der Fächer bewegt werden können. Insbesondere erstreckt sich das mindestens eine passive Förderelement über die gesamte Bodenfläche der jeweiligen Fächer. Alternativ hierzu sind passive Förderelemente und aktive Förderelemente innerhalb eines des Fächermiteinander kombiniert. Dabei können unterschiedliche Fächer unterschiedlich hinsichtlich dem Vorsehen der aktiven und passiven Förderelemente ausgebildet sein. So kann beispielsweise bei Fächern für leichtere Packstücke die Bodenfläche als Rutschfläche ausgebildet sein, wohingegen Fächer für schwere Packstücke eine angetriebene Rollenbahn aufweisen, sodass stets sichergestellt ist, dass die Packstücke einfach innerhalb der jeweiligen Fächer insbesondere in Richtung der Entnahmeöffnung bewegt werden können.

Vorzugsweise ist mindestens eines der Fächer, mehrere oder alle Fächer als Schubladen ausgebildet. Insbesondere ist eine Kombination aus Schubladen und Fächern vorgesehen zur flexiblen Verstauung von Packstücken. So können beispielsweise Schubladen empfindlichere Packstücke bzw. kleinere Packstücke aufnehmen.

Vorzugsweise weist mindestens eines der Fächer, mehrere oder alle Fächer ein Anschlagelement auf. Dabei ist das Anschlagelement im Bereich der Entnahmeöffnung vorgesehen. Das Packstück rutscht dabei gegen das Anschlagelement, wobei das Anschlagelement sicherstellt, dass bei Öffnen des Verschließelements des jeweiligen Faches durch den Zusteller das Packstück nicht aus dem jeweiligen Fach herausfällt.

Vorzugsweise weisen mindestens zwei Fächer eine unterschiedliche Größe auf. Somit ist es möglich Fächer vorzusehen für unterschiedlich große Packstücke, sodass innerhalb des Liefercontainers eine Sortierung der Packstücke anhand der Größe der Packstücke erfolgen kann. Hierdurch ist es möglich die Packstücke platzsparend in den Fächern mit entsprechender Größe zu verstauen und somit mehr Packstücke in dem Liefercontainer unterzubringen.

Vorzugsweise weist jedes Fach ein Indikatorelement auf zur Anzeige des Faches zur Entnahme eines Packstücks. Insbesondere ist dabei das Indikatorelement an dem Verschließelement angeordnet. Insbesondere handelt sich bei dem Indikatorelement um ein optisches Indikatorelement wie beispielsweise eine LED, ein akustisches Indikatorelement oder ein mechanisches Indikatorelement. Insbesondere wird dabei das Verschließelement als Indikatorelement verwendet, wobei das Verschließelement zur Anzeige des entsprechenden Fachs geöffnet wird. Dabei wird durch das Indikatorelement das Fach angezeigt, welches das als nächstes auszuliefernde Packstück enthält. Gelangt somit der Zusteller zu der nächsten Zustelladresse, wird durch das Indikatorelement das Fach angezeigt, welches das an der entsprechenden Zustelladresse auszuliefernde Packstück oder Packstücke enthält. Somit wird das Auffinden des Packstücks durch den Zusteller deutlich vereinfacht und beschleunigt. Gleichzeitig wird eine Verwechslunge von Packstücken und somit eine falsche Zustellung verhindert. Insbesondere kann jedes Fach eine Kombination von Indikatorelementen aufweisen. So kann beispielsweise ein mechanisches Indikatorelement vorgesehen sein, durch Öffnen des entsprechenden Verschließelementes, kombiniert mit einem akustischen Indikatorelement, welches ein Klickgeräusch erzeugt und somit ebenfalls das betreffende Fach anzeigt.

Vorzugsweise ist eine Aktuatoreinheit vorgesehen zur Entriegelung eines der Verschließelemente. Insbesondere ist jeweils eine Aktuatoreinheit zur Entriegelung jedes der Verschließelemente individuell vorgesehen. Somit können die Verschließelemente der Entnahmeseite individuell angesteuert werden und somit lediglich das Verschließelement geöffnet werden, welches zur Entnahme des betreffenden Packstücks erforderlich ist.

Vorzugsweise ist eine Aktuatoreinheit vorgesehen zur Entriegelung einer Sicherung für das Verschließelement der Beladeseite. Hierbei kann die Sicherung ein Öffnen des Verschließelementes verhindern, sodass eine unbefugte Entnahme der Packstücke verhindert wird. Alternativ oder zusätzlich wird durch die Aktuatoreinheit zur Entriegelung einer Sicherung für das Verschließelement der Beladeseite ein ungewolltes Schließen des Verschließelements der Beladeseite verhindert. Handelt es sich bei dem beispielsweise bei dem Verschließelement der Beladeseite um ein Schiebetor, welches zum Öffnen nach oben verschoben wird, wird durch die Sicherung ein ungewolltes Herunterfallen des Schiebetors verhindert. Erst durch Aktivieren der Aktuatoreinheit wird die Sicherung entriegelt, sodass das Schiebetor geschlossen wird/werden kann.

Vorzugsweise ist eine Solarzelle auf einer Oberseite des Liefercontainers vorgesehen zur Stromversorgung. Weitere Elemente der Stromversorgung können ebenfalls vorgesehen sein, wie beispielsweise ein Stromwandler, eine Batterie oder dergleichen.

Vorzugsweise weist der Liefercontainer eine Steuereinheit auf, welche insbesondere verbunden ist mit der Solarzelle und/oder einer Batterie zur Stromversorgung. Weiterhin ist die Steuereinheit bevorzugt verbunden mit den vorgesehenen Indikatorelementen und/oder Aktuatoreinheiten. Hierbei kann es sich um die Aktuatoreinheiten der Entnahme- und/oder der Beladeseite handeln. Somit wird durch die Steuereinheit eine entsprechende Ansteuerung der Indikatorelemente und der jeweiligen Aktuatoreinheiten gewährleistet. Aufgrund der Stromversorgung durch die Solarzelle und/oder Batterie ist somit der Liefercontainer autark, bedarf keiner weiteren Stromversorgung und ein elektrisches Verbinden des Liefercontainers mit einem Lieferfahrzeug ist somit nicht erforderlich, kann jedoch weiterhin ermöglicht sein, zum Aufladen einer Batterie oder dergleichen.

Vorzugsweise weist der Liefercontainer an seiner Unterseite Rollen auf zur Bewegung des Liefercontainers. Hierdurch wird das Handling des Liefercontainers vereinfacht. Insbesondere ist ebenfalls eine Rollenbremse vorgesehen, sodass ein mechanisches Bremsen der Bewegung des Rollencontainers ermöglicht wird.

Vorzugsweise sind unterhalb der Fächer auf der Entnahmeseite Standbretter angeordnet, wobei die Standbretter von einer eingezogenen Position in eine ausgefahrene Position bewegbar sind. Somit kann über die Standbretter der Zusteller auch die oberen Fächer des Liefercontainers erreichen und dort sicher Packstücke entnehmen. Insbesondere sind die Standbretter manuell von der eingezogenen Position in eine ausgefahrene Position bewegbar und andersherum. Alternativ hierzu ist ein Aktuator vorgesehen, um die Standbretter von der eingezogenen Position in die ausgefahrene Position zu bewegen bzw. andersherum. Vorzugsweise ist ein Sensor vorgesehen, welcher die Position der Standbretter erfasst. Dabei wird das Sensorsignal weitergegeben, insbesondere an die Steuereinheit des Liefercontainers und/oder des Auslieferfahrzeug zur Erzeugung eines Warnsignals sofern das Auslieferfahrzeug bewegt wird und die Standbretter in der ausgefahrenen Position sind. Somit wird die Sicherheit erhöht und eine Beschädigung des Liefercontainers oder Verletzung von Passanten bzw. Beschädigung von Gegenständen der Umgebung durch die ausgefahrenen Standbretter vermieden. Insbesondere kann ein Losfahren des Auslieferfahrzeugs bei ausgefahrenen Standbrettern durch die Steuereinheit gerade verhindert werden.

Vorzugsweise weisen die Verbindungselemente eine Verriegelung auf, um ein ungewolltes Lösen des Liefercontainers vom Auslieferfahrzeug zu verhindern.

Vorzugsweise sind Verbindungsbolzen als Verbindungselemente vorgesehen zur Verbindung des Liefercontainers mit einem Auslieferfahrzeug. Insbesondere weisen die Verbindungsbolzen eine Verriegelung auf, beispielsweise ausgebildet als Querbolzen, so dass ein unbeabsichtigtes Lösen des Liefercontainers vom Auslieferfahrzeug verhindert werden kann.

Weiterhin betrifft die vorliegende Erfindung ein Auslieferfahrzeug mit einer Fahrzeugbasis und einem Liefercontainer wie vorstehend beschrieben. Dabei sind Fahrzeugbasis und Liefercontainer durch die Verbindungselemente des Liefercontainers, insbesondere ausgebildet als Verbindungsbolzen, miteinander verbunden.

Vorzugsweise sind Liefercontainer und Fahrzeugbasis lösbar miteinander verbunden, sodass ein Austauschen des Liefercontainers vereinfacht wird.

Vorzugsweise weist das Auslieferfahrzeug genau einen Liefercontainer auf.

Vorzugsweise ist die Entnahmeseite seitlich am Auslieferfahrzeug angeordnet. Hierbei handelt es sich insbesondere um die Beifahrerseite bzw. die rechte Seite, sodass eine Entnahme der Packstücke von einem Bürgersteig bzw. einer straßenabgewandten Seite aus ermöglicht wird. Hierdurch wird die Sicherheit der Zusteller gewährleistet.

Vorzugsweise weist die Fahrzeugbasis eine Sperrgutbox auf zur Aufnahme von Sperrgut, welche insbesondere verschließbar ist mittels eines Rollentors oder einer Tür. Dabei ist die Sperrgutbox insbesondere angeordnet zwischen dem Führerhaus und dem Liefercontainer. Somit ist es mit dem Auslieferfahrzeug möglich auch große Packstücke als Sperrgut zu transportieren und auszuliefern.

Vorzugsweise besteht kein Durchgang zwischen dem Fahrerhaus der Fahrzeugbasis und dem Liefercontainer. Da der Liefercontainer insbesondere keinen Mittelgang aufweist, ist ein Betreten des Liefercontainers nicht erforderlich und somit möglich. Ein Durchgang kann somit entfallen.

Vorzugsweise weist die Fahrzeugbasis einen Stromerzeuger und/oder eine Steuerungseinheit auf, wobei die Fahrzeugbasis mittels einer kabelgebundenen Steckverbindung mit dem Liefercontainer verbunden ist. Somit wird durch den Stromerzeuger der Fahrzeugbasis eine Stromversorgung des Liefercontainers sichergestellt. Gleichzeitig kann eine Steuerung der Funktion des Liefercontainers durch die Steuerungseinheit der Fahrzeugbasis zentral gewährleistet werden.

Alternativ hierzu weist die Fahrzeugbasis einen Stromerzeuger und/oder eine Steuerungseinheit auf, wobei die Fahrzeugbasis Kontaktelemente aufweist und wobei der Liefercontainer entsprechende Kontaktelemente aufweist, wobei die Kontaktelemente der Fahrzeugbasis bei Verbinden des Liefercontainers mit der Fahrzeugbasis in Kontakt mit den Kontaktelementen des Liefercontainers kommen zur Übertragung von Strom und/oder Steuersignalen. Somit wird gleichzeitig durch Verbinden des Liefercontainers mit der Fahrzeugbasis eine elektrische Verbindung zwischen der Fahrzeugbasis und dem Liefercontainer hergestellt. Ein zusätzlicher Arbeitsschritt entfällt.

Alternativ hierzu ist die Fahrzeugbasis und der Liefercontainer nicht elektrisch miteinander verbunden. Insbesondere wenn der Liefercontainer autark ist und seine eigene Stromversorgung sowie seine eigene Steuereinheit aufweist, kann ein elektrisches Verbinden des Liefercontainers mit der Fahrzeugbasis entfallen. Hierdurch wird das Verbinden des Liefercontainers mit der Fahrzeugbasis vereinfacht und Fehlerquellen reduziert.

Vorzugsweise weist das Auslieferfahrzeug ein Gesamtgewicht von weniger als 3,5 t auf inklusive maximal zulässiger Höchstbeladung. Insbesondere weist hierzu das Auslieferfahrzeug ein Gewicht von weniger als 2t, bevorzugt weniger als 1,8t und besonders bevorzugt weniger als 1,6t auf. Hierdurch ist das Auslieferfahrzeug klein ausgebildet und kann somit jegliche Zustelladresse erreichen, ohne dass es Verkehrsbeschränkungen unterliegt. Weiterhin unterliegt das Auslieferfahrzeug keinerlei Gewichtsbeschränkungen und kann mit einem normalen PKW-Führerschein geführt werden.

Weiterhin betrifft die vorliegende Erfindung ein System zum Ausliefern von Packstücken mit einem Auslieferfahrzeug wie vorstehend beschrieben. Weiterhin weist das System eine Beladestation auf zur Beladung des Liefercontainers.

Vorzugsweise weist das System eine Entladestation auf zum Entladen nicht zugestellter Packstücke aus dem Liefercontainer.

Vorzugsweise weist die Entladestation eine Führung auf, wobei durch die Führung die Beladeseite und Entnahmeseite des Liefercontainers auf unterschiedlichen Höhen angeordnet sind, sodass Packstücke aus der Beladeseite herausrutschen können. Insbesondere sind hierzu in der Entladestation Führungselemente vorgesehen, welche entsprechend der einzelnen Fächer angeordnet sind, um die aus der Beladeseite herausrutschenden Packstücke aufzunehmen und zur weiteren Verarbeitung weiterleiten können. Dabei ist die Führung beispielsweise ausgebildet als Wellenführung. Insbesondere, sofern der Liefercontainer an seine Unterseite Rollen aufweist, kann der Liefercontainer mittels dieser Rollen auf die Wellenführung aufgeschoben werden, sodass die Packstücke aus der Beladeseite herausrutschen können. Dabei ist die Führung derart ausgebildet, dass die unterschiedlichen Höhen sicherstellen, dass die Packstücke aus der Beladeseite herausrutschen können auch wenn die Fächer eine Schräge aufweisen.

Vorzugsweise weist das System ein Terminal auf, wobei das Terminal mit der Steuereinheit des Auslieferfahrzeug und/oder des Liefercontainers verbunden ist zur Steuerung der Funktionalität des Liefercontainers und insbesondere zur Entriegelung der Verschließelemente der einzelnen Fächer. Dabei erfolgt die Verbindung des Terminals mit der Steuereinheit insbesondere mittels einer Drahtloskommunikationsverbindung. Über das Terminal kann somit der Zusteller die Entriegelung der Verschließelemente der jeweiligen Fächer ansteuern, sodass die entsprechenden Fächer geöffnet werden zur Entnahme der Packstücke. Alternativ erfolgt eine Steuerung mittels des Terminals über die Zustelladresse, sodass eine automatische Öffnung der jeweiligen Fächer ermöglicht wird.

Vorzugsweise ist das Terminal ausgebildet eine Zustellroute anzuzeigen und/oder die nächste Zustelladresse und/oder Statusinformationen wie beispielsweise verbleibende Anzahl Packstücke, verbleibende Zustellzeit, Stauinformationen auf der Zustellroute oder dergleichen. Ebenfalls kann durch den Terminal eine Zustellroute empfangen bzw. aktualisiert werden, welche dem Zusteller sodann vorgegeben wird.

Vorzugsweise weist der Liefercontainer eine Markierung auf, wobei das Terminal ausgebildet ist, die Markierung zu erfassen und anhand der Markierung eine Zustellroute insbesondere von einem Server herunterzuladen. Somit wird sichergestellt, dass der richtige Liefercontainer mit der richtigen Zustellroute verbunden ist. Dabei kann die Markierung als eindeutiges Merkmal ausgebildet sein insbesondere als QR-Code, 1D Barcode, Zahlencode oder dergleichen.

Weiterhin betrifft die vorliegende Erfindung ein Verfahren zum Betrieb eines Systems wie vorstehend beschrieben mit den Schritten:
Beladen eines Liefercontainers mit Packstücken;
Anfahren von Zieladressen entlang einer Zustellroute; und
Ausliefern der Packstücke an den jeweiligen Zustelladressen.

Vorzugsweise wird vor dem Beladen des Liefercontainers der Liefercontainer mit der Fahrzeugbasis verbunden. Alternativ hierzu wird zunächst eine Beladung des Liefercontainers durchgeführt und sodann der beladene Liefercontainer mit der Fahrzeugbasis verbunden. Dies hat den Vorteil, dass eine Beladung unabhängig von dem Vorhandensein einer Fahrzeugbasis erfolgen kann. Hierdurch werden die Abläufe der Auslieferung flexibler.

Vorzugsweise umfasst die Auslieferung nach dem Anfahren einer Zustelladresse die Schritte:
Freigabe eines Faches durch das Terminal, wodurch eine Entriegelung und/oder automatische Öffnung des jeweiligen Verschließelements des Faches erfolgt;
Entnahme eines Packstücks;
Schließen des Faches; und
Übergabe des Packstücks an den Empfänger.

Hieran schließt sich gegebenenfalls die Quittierung des Empfangs des Packstücks durch den Empfänger an, bevorzugt ebenfalls auf dem Terminal. Nachfolgend wird eine neue Zustelladresse angefahren und eine neue Auslieferung eines anderen Packstücks durchgeführt.

Vorzugsweiseerfolgt die Freigabe des Faches durch das Terminal manuell. Hierbei wählt der Zusteller ein Fach aus, welches freigegeben werden soll zur Öffnung des jeweiligen Faches und zur Entnahme des Packstücks. Alternativ hierzu erfolgt die Freigabe des Faches durch Auswahl einer Zustelladresse. Hierbei können die Zustelladressen in einer Liste entsprechend der Reihenfolge in der Zustellroute angezeigt werden, wobei der Zusteller die aktuelle Zustelladresse auswählt zur Freigabe des Faches und Entnahme des Packstücks. Alternativ erfolgt eine Freigabe des Faches anhand der Position des Terminals, sodass ein Fach lediglich dann freigegeben werden kann, wenn das Terminal an einer Position in der Nähe der Zustelladresse sich befindet. Hierdurch wird sichergestellt, dass eine richtige Zustelladresse ausgewählt wird.

Vorzugsweise erfolgt nach dem Beladen mittels des Terminals eine Initialisierung des Liefercontainers mit den Schritten:
Ermitteln einer Identifizierung des Liefercontainers und
Bereitstellen einer Zustellroute anhand der ermittelten Identifizierung.

Somit wird sichergestellt, dass der richtige Liefercontainer der richtigen Zustellroute zugeordnet ist und die Packstücke zuverlässig an die Zustelladresse gelangen.

Vorzugsweise werden Packstücke, welche nicht zugestellt wurden oder werden konnten nach Abfahren der kompletten Zustellroute entladen, insbesondere über die Entladeseite des Liefercontainers beispielsweise durch Vorsehen einer Entladestation wie vorstehend beschrieben.

Vorzugsweise erfolgt die Beladung innerhalb eines Faches in einer Zustellreihenfolge. Somit liegt ein Packstück näher an der Entnahmeöffnung des jeweiligen Faches, umso früher die Zustelladresse auf der Zustellroute erreicht wird. Soll ein erstes Packstück an einer ersten Zustelladresse zugestellt werden und ein zweites Packstück an eine in der Zustellroute nachfolgenden Zustelladresse zugestellt werden, so ist das zweite Packstück ausgehend von der Entnahmeöffnung des jeweiligen Faches nach dem ersten Packstück angeordnet. Hierbei können einzelne Packstücke insbesondere entsprechen ihrer Größe in unterschiedlichen Fächern vorgesehen werden. Packstücke von Zustelladressen, welche entlang der Zustellroute unmittelbar aufeinander folgenden, müssen somit nicht in einem Fach unmittelbar aufeinander folgen, sondern können auf unterschiedliche Fächer verteilt werden. Stets wird jedoch in jedem Fach ein Packstück, welches ausgehend von der Entnahmeöffnung weiter vorne in der Reihenfolge der Packstücke angeordnet ist, früher ausgeliefert. Für das Beladen bedeutet dies, dass zunächst von der Beladeseite das erste Packstücken beladen wird und nachfolgend das zweite Packstück. Erfolgt die Beladung der einzelnen Fächer durch die Entnahmeöffnung, kehrt sich die Beladereihenfolge selbstverständlich um.

Vorzugsweise weist die Zustellroute mindestens zwei Segmente auf, wobei jedes Segment eine Reihenfolge von mehreren Zustelladressen umfasst, wobei einzelne Fächer beladen werden mit Packstücken eines Segmentes der Zustellroute insbesondere in der Zustellreihenfolge entsprechend dem jeweiligen Segment. Somit weist ein erstes Fach Packstücke eines ersten Segments der Zustellroute auf, wobei innerhalb dieses Faches die jeweiligen Packstücke in der Zustellreihenfolge entlang des ersten Segments angeordnet sind. Ein weiteres Fach weist Packstücke eines weiteren Segments auf, wobei Packstücke in dem weiteren Fach entsprechend der Zustellreihenfolge des weiteren Segments angeordnet sind. Hierdurch ist es möglich einzelne Segmente zu tauschen während einer Auslieferung zur Anpassung der Zustellroute an aktuelle Gegebenheiten. Ein Umsortieren der Packstücke ist somit nicht erforderlich bei einer segmentweisen Anpassung der Zustellroute. Aufgrund der Segmentierung der Zustellroute werden lediglich die Reihenfolge der Segmente angepasst, wobei die Zustellroute innerhalb der einzelnen Segmente beibehalten wird. Somit können die Packstücke weiterhin in Zustellreihenfolge den einzelnen Fächern entnommen werden.

Vorzugsweise ist das Terminal ausgebildet, Statusinformationen, wie Stau, Sperrungen, Verzögerung oder dergleichen entlang der Zustellroute zu empfangen, wobei eine Anpassung der Zustellroute durch Vertauschen und/oder Überspringen von Segmenten entsprechend der Statusinformationen erfolgt. Ist somit beispielsweise ein Teil der Zustellroute blockiert oder gesperrt, erfolgt eine Umsortierung der Segmente der Zustellroute, wobei die Anordnung der Packstücke innerhalb der einzelnen Fächer beibehalten werden kann und ein Umsortieren der einzelnen Fächer nicht erforderlich ist. Lediglich die Reihenfolge der Fächer ändert sich entsprechend der Änderung der abgefahrenen Segmente der Zustellroute.

Nachfolgend wird die Erfindung anhand bevorzugter Ausführungsform unter Bezugnahme auf die beigefügten Zeichnungen näher erläutert. Es zeigen:
- Fig. 1: ein Liefercontainer gemäß der vorliegenden Erfindung,
- Fig. 2: eine Seitenansicht eines Auslieferfahrzeug gemäß der vorliegenden Erfindung
- Fig. 3: eine Schnittansicht des Liefercontainers und
- Fig. 4: ein System gemäß der vorliegenden Erfindung.

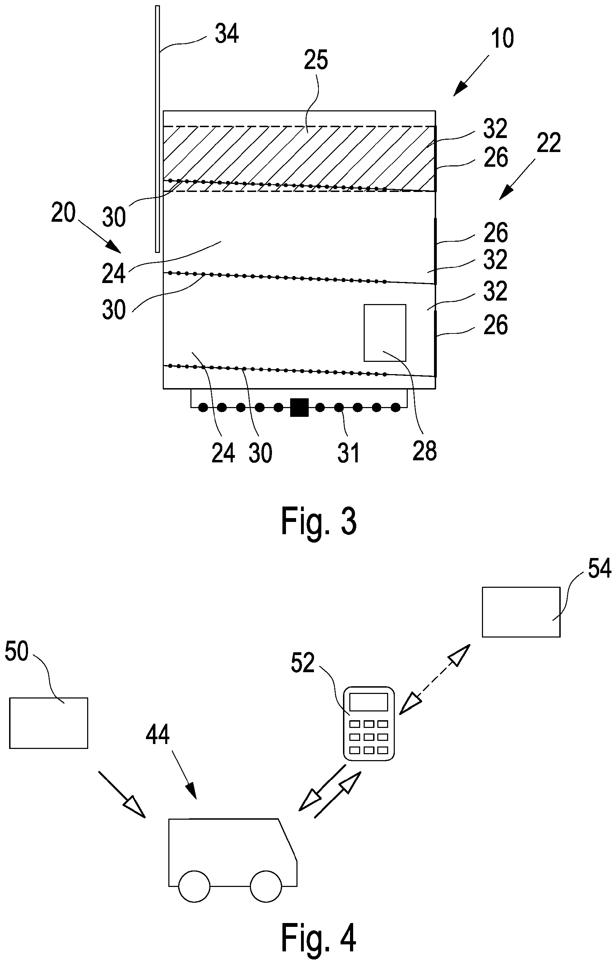

Der Liefercontainer 10 gemäß der vorliegenden Erfindung weist eine Oberseite 12, eine Vorderseite 14, eine Rückseite 16, eine Unterseite 18 sowie eine linke Seite 20 (Figur 3) und eine rechte Seite 22 auf. Weiterhin weist der Liefercontainer 10 eine Vielzahl von Fächern 24 auf zur Aufnahme von Packstücken 28 oder sonstigen Sendungen, welche insbesondere auf unterschiedlichen Ebenen 24a, 24b, 24c angeordnet sind. Dabei weisen die Fächer 24 Entnahmeöffnungen 32 auf, welche von außen zugänglich sind. Die Entnahmeöffnungen 32 der Fächer 24 sind mit Verschließelementen, ausgebildet als Türen 26, verschlossen, sodass ein Herausfallen der Packstücke während der Transportfahrt verhindert wird. Alternativ hierzu können die Türen 26 zumindest auch teilweise als Rollentore ausgebildet sein. Dabei erstrecken sich die Fächer 24 von der linken Seite 20 des Liefercontainers 10 bis zur rechten Seite 22 des Liefercontainers. Weiterhin ist auf der linken Seite 20 des Liefercontainers 10 eine Beladeseite zur Beladung der einzelnen Fächer 24 ausgebildet. Die rechte Seite 22 bildet eine Entnahmeseite, auf der während der Zustellfahrt die Packstücke 28 durch die Entnahmeöffnungen 32 der Fächer 24 entnommen werden können. Dabei sind die Bodenflächen 30 der Fächer 24 schräg ausgebildet und weisen somit ein von der Beladeseite zur Entnahmeseite verlaufendes Gefälle auf. Somit werden aufgrund der Gravitation oder mittels eines Antriebs Packstücke 28 von der Beladeseite über die schräge Bodenfläche 30 in Richtung der Entnahmeöffnung 32 bewegt. Hierdurch wird sichergestellt, dass beim Öffnen der Tür 26 die Packstücke 28 durch den Zusteller erreichbar sind und somit durch die Entnahmeöffnung 32 entnommen werden können.

Weiterhin können insbesondere in der obersten Ebene 24a Schubfächer bzw. Schubladen 25 vorgesehen zur Aufnahme von Packstücken oder sonstigen Sendungen. Im Beispiel der Figuren sind dabei exemplarisch zwei Schubladen 25 vorgesehen. Dabei kann die Anzahl der vorgesehenen Schubladen 25 variieren und an die jeweilige Anwendung angepasst sein. Auch können Schubladen 25 in anderen oder weiteren Ebenen 24b, 24c vorgesehen sein, wobei insbesondere Schubladen unterschiedliche Größen aufweisen können zur Aufnahme von Packstück unterschiedlicher Größe.

Weiterhin können die Fächer 24 unterschiedliche Größen aufweisen, sodass die Packstücke 28 entsprechend ihrer Größe den einzelnen Fächern zugeordnet werden können und somit platzsparend in dem Liefercontainer 10 angeordnet werden können. Hierdurch kann die Anzahl der Packstücke, welche durch den Liefercontainer 10 aufgenommen werden können, erhöht werden.

Erfindungsgemäß weist die auf der linken Seite 20 angeordnete Beladeseite eine Schiebetür 34 auf. Über die Schiebetür 34 sind alle Fächer 24 des Liefercontainers 10 gemeinsam zu gängig. Somit weist die Beladeseite für alle Fächer 24 ein gemeinsames Verschließelement ausgebildet als Schiebetür 34 auf, welche in der Figur 3 in einer Offenstellung gezeigt ist. In dieser Position der Schiebetür 34 kann sodann ein Beladen der Fächer 24 erfolgen.

Weiterhin weist jede Tür 26 einen Aktuator auf zur Entriegelung der Tür, sodass die Tür 26 geöffnet werden kann bzw. geöffnet wird bei Aktivierung des Aktuators. Dabei kann ebenso ein Aktuator vorgesehen sein an der Schiebetür 34 der Beladeseite. Durch den Aktuator der Beladeseite wird sichergestellt, dass die Schiebetür 34 in einer Offenstellung verbleibt nicht unbeabsichtigt herunterfällt. Hierdurch wird die Sicherheit während dem Beladevorgang gewährleistet.

Weiterhin sind an der Unterseite 18 des Liefercontainers 10, Rollen 31 angeordnet, sodass der Liefercontainer 10 manuell bewegt werden kann. Insbesondere ist eine Bremse vorgesehen zur manuellen Bremsung des Liefercontainers.

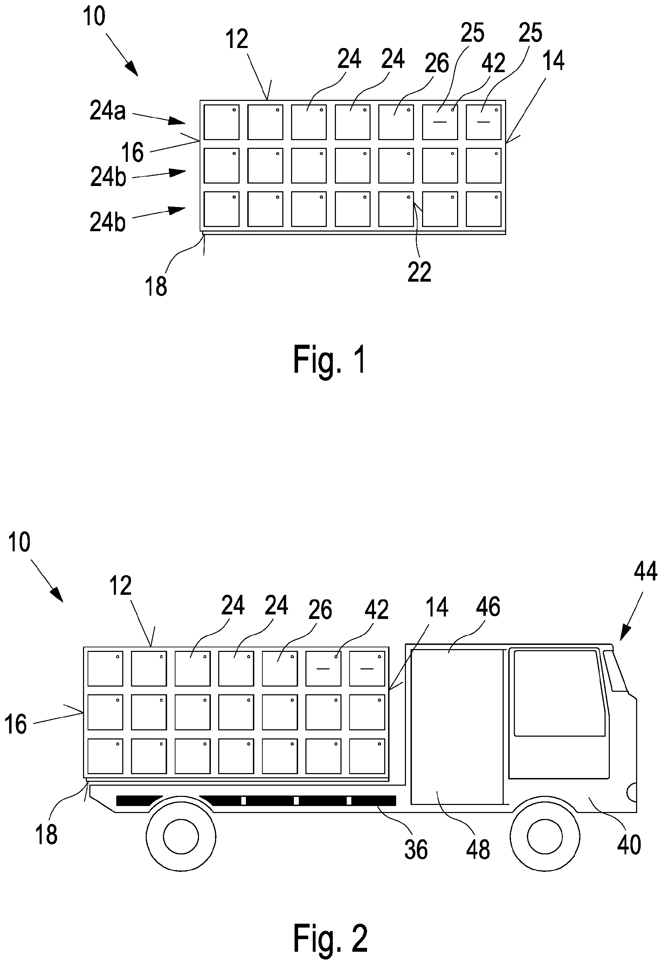

Unterhalb der Fächer 24 an der Entnahmeseite sind Standbretter 36 angeordnet. Die Standbretter 36 sind dabei entweder im Liefercontainer 10 vorgesehen oder in einer Fahrzeugbasis 40 angeordnet, wie in Fig. 2 dargestellt. Dabei sind die Standbretter 36 von einer eingefahrenen Position in eine ausgefahrene Position bewegbar. Durch die Standbretter ist es dem Zusteller ermöglicht Packstücke aus den oberen Fächern 24 zu entnehmen, sobald sich der Zusteller auf das jeweilige Standbrett 36 stellt.

Weiterhin weist jede Tür 26 ein Indikatorelement, ausgebildet als LED-Lampe 42, auf. Durch die LED-Lampe wird dem Zusteller signalisiert, welches Fach zu öffnen ist zur Zustellung des nächsten Packstücks an der aktuellen Zustelladresse. Statt eine LED-Lampe kann das Indikatorelement auch mechanisch ausgebildet sein und beispielsweise durch Öffnen der Tür 26 dem Zusteller signalisieren, in welchem Fach das als nächstes zuzustellende Packstücke 28 sich befindet. Somit ist für den Zusteller sofort ersichtlich, wo sich das Packstück 28 zur Zustellung befindet. Ein umständliches Suchen aus mehreren Regalen entfällt, wodurch die Zustellzeit für den Zusteller reduziert wird.

Figur 2 zeigt ein Auslieferfahrzeug 44 mit einer Fahrzeugbasis 40. Dabei wird die Fahrzeugbasis 40 mit dem Liefercontainer 10 verbunden. Insbesondere nimmt die Fahrzeugbasis 40 genau einen Liefercontainer 10 auf. Insbesondere wird der Liefercontainer 10 auf der Fahrzeugbasis 40 mittels Verbindungsbolzen gesichert.

Weiterhin weist die Fahrzeugbasis 40 eine Sperrgutbox 46 auf, welche ebenfalls mittels einer Tür oder einem Rolltor 48 verschlossen ist. Dabei dient die Sperrgutbox 46 der Aufnahme von Sperrgütern, welche nicht in den Fächern 24 untergebracht werden können.

Figur 4 zeigt ein System gemäß der vorliegenden Erfindung bestehend aus einer Beladestation 50, einem Auslieferfahrzeug 44 und einem Terminal 52 zur Steuerung der Funktionalität des Liefercontainers 10. Hierzu ist der Liefercontainer 10 mit einer Steuereinheit (nicht dargestellt) verbunden zur Steuerung der Indikatorelementen bzw. Aktuatoren zur Öffnung der jeweiligen Türen. Mit der Steuereinheit ist der Terminal 52 verbunden. Das Terminal 52 ist dabei insbesondere über eine Drahtloskommunikationsverbindung mit der Steuereinheit verbunden.

Weiterhin ist der Terminal 52 ausgebildet eine Zustellroute mit einer Abfolge von Zustelladressen beispielsweise von einem Server 54 herunterzuladen. Hierzu kann beispielsweise eine Identifizierung des Liefercontainers anhand einer eindeutigen Markierung, wie beispielsweise einem QR-Code oder einem numerischen Code, welcher durch das Terminal erfasst wird, erfolgen und sodann von dem Server 54 die entsprechende Zustellroute auf das Terminal heruntergeladen werden. Erreicht sodann das Auslieferfahrzeug 44 die Zustelladresse entlang der Zustellroute, wird dies vom Zusteller bestätigt oder automatisch durch das Terminal 52 erfasst. Sodann wird durch das Terminal 52 die Freigabe des entsprechenden Faches 24 an die Steuereinheit übermittelt, welche den entsprechenden Aktuator zur Freigabe der Tür 26 des entsprechenden Faches 24 aktiviert. Sodann wird die Tür geöffnet (beispielsweise durch eine Federkraft) oder lässt sich vom Zusteller öffnen. Das entsprechende Fach 24 enthält das zu der Zustelladresse gehörige Packstück, welches vom Zusteller aus dem Fach 24 entnommen wird und sodann zugestellt wird. Der Zusteller schließt die Tür 26 und folgt weiter der Zustellroute.

Dabei sind in den einzelnen Fächern 24 die Packstücke 28 entsprechend einer Zustellreihenfolge angeordnet, sodass ein Packstück, welches früher auf der Zustellroute ausgeliefert werden muss, innerhalb eines Faches ausgehend von der Entnahmeöffnung 32 vor Packstücken angeordnet, welche später auf der Zustellroute ausgeliefert werden müssen. Hierdurch ist sichergestellt, dass stets das vorderste Packstück innerhalb eines Faches ausgehend von der Entnahmeöffnung 32 das Packstück ist, welches innerhalb des jeweiligen Faches als nächstes ausgeliefert wird. Ein Umsortieren eines Packstückes innerhalb eines Faches ist somit nicht erforderlich.

Weiterhin können einzelne Fächer 24 einzelnen Segmenten einer Zustellroute zugeordnet sein, wobei innerhalb der Fächer weiterhin die Packstücke entsprechend einer Zustellreihenfolge innerhalb des jeweiligen Segments angeordnet sind. Erfolgt somit eine geänderte Abfahrtreihenfolge der einzelnen Segmente der gesamten Zustellroute, ändert sich lediglich die Abfolge der zu öffnenden Fächer. Die Reihenfolge innerhalb der jeweiligen Fächer pro Segment bleibt dabei unverändert. Umständliches umsortieren ist hierbei nicht erforderlich und die Zustellroute kann hierbei segmentweise dynamisch an Gegebenheiten wie Stau, Sperrungen oder dergleichen angepasst werden.

Somit ist ein flexibles System geschaffen, wobei im Liefercontainer mehr Raum zur Beförderung von Packstücken bereitgestellt wird, wobei die Packstücke entsprechend angeordnet sind und somit das Auffinden durch den Zusteller erleichtert wird. Hierdurch reduziert sich die Zustellzeit und es kann, verglichen mit bekannten Lieferfahrzeugen, eine größere Anzahl an Packstücken innerhalb der gleichen Zeit ausgeliefert werden.

## Patentansprüche

1. Liefercontainer zur Aufnahme durch ein Auslieferfahrzeug, mit
einer Vielzahl von Fächern (24), wobei die Fächer (24) von außen zugänglich sind und jedes Fach (24) ausgebildet ist zur Aufnahme von mehreren Packstücken (28),
einer Vielzahl von Verschließelementen (26) zum Verschließen der Fächer (24) auf einer Entnahmeseite und
einem Verbindungselement zur Verbindung mit einem Auslieferfahrzeug (44),
wobei mehrere der Fächer (24) über eine Beladeseite zugänglich sind, wobei die Beladeseite gegenüber der Entnahmeseite angeordnet ist,
wobei die Belade- und Entnahmeseite im Zustand, in dem der Liefercontainer durch ein Auslieferfahrzeug aufgenommen ist, von außen zugänglich ist,
wobei die Beladeseite ein Verschließelement oder mehrere Verschließelemente aufweist zum Verschließen der Fächer (24) und
wobei mindestens eine Schiebetür (34) an der Beladeseite angeordnet ist zum Verschließen mehrerer Fächer (24).

2. Liefercontainer nach Anspruch 1, **dadurch gekennzeichnet, dass** es sich bei den Verschließelemente auf der Entnahmeseite um Türen (26) oder Rolltore handelt.

3. Liefercontainer nach Anspruch 1 oder 2, **dadurch gekennzeichnet, dass** sich mindestens eines der Fächer (24) über die gesamte Breite des Liefercontainers erstrecken.

4. Liefercontainer nach einem der Ansprüche 1 bis 3, **dadurch gekennzeichnet, dass** mindestens eines der Fächer (24) schräg ausgebildet sind.

5. Liefercontainer nach einem der Ansprüche 1 bis 4, **dadurch gekennzeichnet, dass** jedes Fach (24) ein Indikatorelement (42) aufweist zur Anzeige des Faches (24) zur Entnahme eines Packstücks (28).

6. Liefercontainer nach einem der Ansprüche 1 bis 5, **gekennzeichnet durch** Rollen (31) an der Unterseite (18) des Liefercontainers (10) zur Bewegung des Liefercontainers (10).

7. Auslieferfahrzeug mit einer Fahrzeugbasis (40) und einem Liefercontainer (10) nach einem der Ansprüche 1 bis 6, wobei insbesondere der Liefercontainer (10) lösbar verbunden ist mit der Fahrzeugbasis (40).

8. Auslieferfahrzeug nach Anspruch 7, **dadurch gekennzeichnet, dass** die Fahrzeugbasis (40) eine Sperrgutbox (46) aufweist insbesondere zwischen einem Fahrerhaus und dem Liefercontainer (10) zur Aufnahme von Sperrgut.

9. Auslieferfahrzeug nach Anspruch 7 oder 8, **dadurch gekennzeichnet, dass** die Fahrzeugbasis (40) einen Stromerzeuger und/oder eine Steuerungseinheit aufweist und die Fahrzeugbasis (40) mittels einer kabelgebundenen Steckverbindung mit dem Liefercontainer (10) verbunden ist oder
die Fahrzeugbasis (40) Kontaktelemente aufweist und wobei der Liefercontainer (10) entsprechende Kontaktelemente aufweist, die bei Verbinden des Liefercontainers (10) mit der Fahrzeugbasis (40) in Kontakt miteinander kommen zur Übertragung von Strom und/oder Steuersignalen.

10. System zum Ausliefern von Packstücken mit einem Auslieferfahrzeug (44) nach einem der Ansprüche 7 bis 9 und einer Beladestation (50) zur Beladung des Liefercontainers (10).

11. System nach Anspruch 10, **gekennzeichnet durch** eine Entladestation zum Entladen nicht zugestellter Packstücke, wobei insbesondere die Entladestation eine Führung aufweist, wobei durch die Führung die Seiten des Liefercontainers auf unterschiedlichen Höhen angeordnet sind, so dass Packstücke aus der Beladeseite herausrutschen können.

12. Verfahren zum Betrieb des Systems nach Anspruch 10 oder 11, mit den Schritten:
Beladen eines Liefercontainers (10) mit Packstücken (28);
Anfahren von Zieladressen entlang einer Zustellroute; und
Ausliefern der Packstücke (28) an den jeweiligen Zustelladressen.

13. Verfahren nach Anspruch 12, bei welchem die Auslieferung nach dem Anfahren einer Zustelladresse umfasst:
Freigabe eines Faches (24) insbesondere durch das Terminal (52);
Entnahme eines Packstücks (28);
Schließen des Faches (24); und
Übergabe des Packstücks (28) an den Empfänger.

14. Verfahren nach Anspruch 12 oder 13, bei welchem nicht zugestellte Packstücke (28) nach Abfahren der kompletten Zustellroute entladen werden insbesondere über die Entladeseite des Liefercontainers (10).

15. Verfahren nach einem der Ansprüche 12 bis 14, bei welchem die Beladung innerhalb eines Faches (24) in einer Zustellreihenfolge erfolgt.

16. Verfahren nach einem der Ansprüche 13 bis 15, bei welchem die Zustellroute mindestens zwei Segmente aufweist, wobei jedes Segment eine Reihenfolge von mehreren Zustelladressen umfasst, wobei einzelne Fächer (24) beladen werden mit Packstücken eines Segmentes der Zustellroute.

## Claims

1. Delivery container for accommodation by a delivery vehicle, with
a plurality of compartments (24), wherein the compartments (24) are accessible from the outside and each compartment (24) is designed to accommodate a plurality of packages (28),
a plurality of closure elements (26) for closing the compartments (24) and
a connecting element for connection to a delivery vehicle (44),
wherein several of the compartments (24) are accessible via a loading side, wherein the loading side is arranged opposite the unloading side,
wherein the loading and unloading sides are accessible from the outside in a state in which the delivery container has been received by a delivery vehicle,
wherein the loading side has one closure element or a plurality of closure elements for closing the compartments (24), and
wherein at least one sliding door (34) is arranged on the loading side for closing a plurality of compartments (24).

2. Delivery container according to claim 1, **characterized in that** the closure elements on the unloading side are doors (26) or roller gates.

3. Delivery container according to claim 1 or 2, **characterized in that** at least one of the compartments (24) extends over the entire width of the delivery container.

4. Delivery container according to any one of claims 1 to 3, **characterized in that** at least one of the compartments (24) is formed slanted.

5. Delivery container according to any one of claims 1 to 4, **characterized in that** each compartment (24) has an indicator element (42) for indicating the compartment (24) for the removal of a package (28).

6. Delivery container according to any one of claims 1 to 5, **characterized by** rollers (31) on the underside (18) of the delivery container (10) for moving the delivery container (10).

7. Delivery vehicle with a vehicle base (40) and a delivery container (10) according to any one of claims 1 to 6, wherein in particular the delivery container (10) is reversibly connected to the vehicle base (40).

8. Delivery vehicle according to claim 7, **characterized in that** the vehicle base (40) has a bulky goods box (46) for the accommodation of bulky goods, in particular between a driver's cab and the delivery container (10).

9. Delivery vehicle according to claim 7 or 9, **characterized in that** the vehicle base (40) has a generator and/or a control unit and the vehicle base (40) is connected to the delivery container (10) by means of a wired plug connector or
the vehicle base (40) has contact elements and wherein the delivery container (10) has corresponding contact elements, which come into contact with each other when connecting the delivery container (10) to the vehicle base (40) for the transmission of current and/or control signals.

10. System for the delivery of packages with a delivery vehicle (44) according to any one of claims 7 to 9 and a loading station (50) for loading the delivery container (10).

11. System according to claim 10, **characterized by** an unloading station for unloading undelivered packages, wherein in particular the unloading station has a guide, wherein due to the guide the sides of the delivery container are arranged at different heights, so that packages can slide out of the loading side.

12. Method for operating the system according to claim 10 or 11, with the steps:
loading a delivery container (10) with packages (28);
driving to destination addresses along a delivery route; and
delivering the packages (28) to the respective delivery addresses.

13. Method according to claim 12, with which after driving to a delivery address the delivery includes:
releasing a compartment (24), in particular by means of the terminal (52);
removing a package (28);
closing the compartment (24); and
delivering the package (28) to the recipient.

14. Method according to claim 12 or 13, with which undelivered packages (28) are unloaded after driving along the entire delivery route, in particular via the unloading side of the delivery container (10).

15. The method according to any one of claims 12 to 14, with which the loading within a compartment (24) takes place in an order of delivery.

16. Method according to any one of claims 12 to 15, with which the delivery route has at least two segments, wherein each segment comprises a sequence of a plurality of delivery addresses, wherein individual compartments (24) are loaded with packages of a segment of the delivery route.

## Revendications

1. Conteneur de livraison destiné à être reçu par un véhicule de livraison, comportant
une pluralité de compartiments (24), dans lequel les compartiments (24) sont accessibles de l'extérieur et chaque compartiment (24) est réalisé pour la réception de plusieurs colis (28),
une pluralité d'éléments de fermeture (26) pour la fermeture des compartiments (24) sur un côté de prélèvement et
un élément de connexion pour la connexion à un véhicule de livraison (44),
dans lequel plusieurs des compartiments (24) sont accessibles par l'intermédiaire d'un côté de chargement, dans lequel le côté de chargement est disposé à l'opposé du côté de prélèvement,
dans lequel le côté de chargement et de prélèvement sont accessibles de l'extérieur dans l'état dans lequel le conteneur de livraison est reçu par un véhicule de livraison,
dans lequel le côté de chargement présente un élément de fermeture ou plusieurs éléments de fermeture pour la fermeture des compartiments (24) et
dans lequel au moins une porte coulissante (34) est disposée sur le côté de chargement pour la fermeture de plusieurs compartiments (24).

2. Conteneur de livraison selon la revendication 1, **caractérisé en ce que** les éléments de fermeture du côté de prélèvement sont des portes (26) ou des portes roulantes.

3. Conteneur de livraison selon la revendication 1 ou 2,
**caractérisé en ce qu'**au moins un des compartiments (24) s'étend sur toute la largeur du conteneur de livraison.

4. Conteneur de livraison selon l'une des revendications 1 à 3,
**caractérisé en ce qu'**au moins un des compartiments (24) est réalisé de manière inclinée.

5. Conteneur de livraison selon l'une des revendications 1 à 4,
**caractérisé en ce que** chaque compartiment (24) présente un élément indicateur (42) pour le signalement du compartiment (24) pour le prélèvement d'un colis (28).

6. Conteneur de livraison selon l'une des revendications 1 à 5,
**caractérisé par** des roulettes (31) sur le côté inférieur (18) du conteneur de livraison (10) pour le déplacement du conteneur de livraison (10).

7. Véhicule de livraison comportant une base de véhicule (40) et un conteneur de livraison (10) selon l'une des revendications 1 à 6,
dans lequel, en particulier, le conteneur de livraison (10) est connecté de manière amovible à la base de véhicule (40).

8. Véhicule de livraison selon la revendication 7, **caractérisé en ce que** la base de véhicule (40) présente un coffre pour marchandises encombrantes (46), en particulier entre une cabine de conduite et le conteneur de livraison (10) pour la réception de marchandises encombrantes.

9. Véhicule de livraison selon la revendication 7 ou 8, **caractérisé en ce que** la base de véhicule (40) présente un générateur de courant et/ou une unité de commande et la base de véhicule (40) est connectée au conteneur de livraison (10) au moyen d'une connexion à fiches filaire ou la base de véhicule (40) présente des éléments de contact et dans lequel le conteneur de livraison (10) présente des éléments de contact correspondants qui, en cas de connexion du conteneur de livraison (10) à la base de véhicule (40), entrent en contact les uns avec les autres pour la transmission de courant et/ou de signaux de commande.

10. Système pour la livraison de colis comportant un véhicule de livraison (44) selon l'une des revendications 7 à 9 et une station de chargement (50) pour le chargement du conteneur de livraison (10).

11. Système selon la revendication 10, **caractérisé par** un poste de déchargement pour le déchargement de colis non distribués, dans lequel, en particulier, le poste de déchargement présente un guidage, dans lequel les côtés du conteneur de livraison sont disposés à des hauteurs différentes par le guidage de sorte que les colis peuvent glisser hors du côté de chargement.

12. Procédé permettant de faire fonctionner le système selon la revendication 10 ou 11, comportant les étapes consistant à :
charger un conteneur de livraison (10) de colis (28) ;
atteindre des adresses cibles le long d'un itinéraire de distribution ; et
livrer les colis (28) aux adresses de distribution respectives.

13. Procédé selon la revendication 12, dans lequel la livraison comprend, après avoir atteint une adresse de distribution :
le déverrouillage d'un compartiment (24), en particulier par le terminal (52) ;
le prélèvement d'un colis (28) ;
la fermeture du compartiment (24) ; et
la remise du colis (28) au destinataire.

14. Procédé selon la revendication 12 ou 13, dans lequel les colis (28) non distribués sont déchargés après avoir parcouru l'itinéraire de distribution complet, en particulier par l'intermédiaire du côté de déchargement du conteneur de livraison (10).

15. Procédé selon l'une des revendications 12 à 14, dans lequel le chargement à l'intérieur d'un compartiment (24) est effectué dans une séquence de distribution.

16. Procédé selon l'une des revendications 13 à 15, dans lequel l'itinéraire de distribution présente au moins deux segments, dans lequel chaque segment comprend une séquence de plusieurs adresses de distribution, dans lequel des compartiments (24) individuels sont chargés de colis d'un segment de l'itinéraire de distribution.
